Europäisches Patentamt

European Patent Office

Office européen des brevets

(11) Numéro de publication : **0 459 879 A1**

(12) # DEMANDE DE BREVET EUROPEEN

(21) Numéro de dépôt : **91401351.1**

(51) Int. Cl.⁵ : **B60J 7/06**

(22) Date de dépôt : **27.05.91**

(30) Priorité : 01.06.90 FR 9006846

(43) Date de publication de la demande :
04.12.91 Bulletin 91/49

(84) Etats contractants désignés :
AT BE CH DE DK ES GB GR IT LI LU NL SE

(71) Demandeur : POMMIER & CIE
7 avenue de la Mare, Zone d'Activités des
Béthunes, Saint Ouen l'Aumone
F-95005 Cergy Pontoise Cédex (FR)

(72) Inventeur : Froissard, Alain
14 rue du Bordelais
F-95100 Argenteuil (FR)

(74) Mandataire : Madeuf, Claude Alexandre Jean
et al
CABINET MADEUF 3, avenue Bugeaud
F-75116 Paris (FR)

(54) Dispositif pour le bâchage de véhicules notamment de véhicules routiers.

(57) Le dispositif pour le bâchage de véhicules et notamment de véhicules routiers est caractérisé en ce qu'il comprend des longerons (6) disposés au moins sur les côtés latéraux du véhicule, lesdits longerons supportant des traverses mobiles (21) sur lesquelles est fixée une bâche (22) reliée à au moins une latte (28) déformable élastiquement et s'étendant longitudinalement.

EP 0 459 879 A1

FIG. 1

La présente invention concerne les véhicules, plus particulièrement, les véhicules routiers bâchés dont au moins la partie supérieure du bâchage c'est-à-dire, celle constituant, le toit du véhicule doit pouvoir être tendu ou au contraire replié pour permettre le chargement, respectivement, le déchargement par la partie haute du véhicule c'est-à-dire sans avoir à démonter la bâche.

L'invention concerne des moyens par lesquels la bâche de couverture supérieure peut être pliée facilement sans nécessité la mise en oeuvre d'un appareillage particulier en faisant que la bâche en position pliée forme des plis en accordéon regulier pour que ladite bâche occupe une surface minimale lorsqu'elle est pliée.

Conformément à l'invention, le dispositif pour le bâchage de véhicules et notamment des véhicules routiers est caractérisé en ce qu'il comporte des longerons disposés au moins sur les côtés latéraux du véhicule, lesdits longerons supportant des traverses mobiles sur lesquelles est fixée une bâche reliée à au moins une latte déformable élastiquement et s'étendant longitudinalement.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une perspective schématique d'un véhicule routier faisant application de l'invention.

La fig. 2 est une coupe partielle très agrandie vue sensiblement suivant la ligne II-II de la fig. 1.

La fig. 3 est une perspective vue de côté d'une partie d'une bâche que comporte le véhicule des figures précédentes.

La fig. 4 est une perspective vue de trois quarts d'une partie d'une des bâches que comporte le véhicule illustré en position repliée.

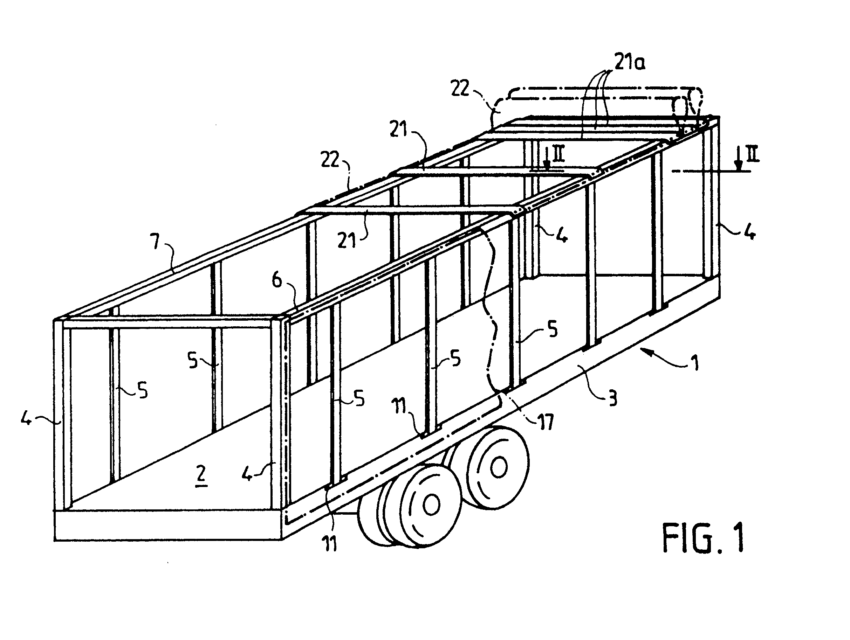

La fig. 1 montre un véhicule routier, constitué par une semi-remorque, designé dans son ensemble par la référence 1. Ce véhicule comporte un plateau 2 délimité entre des longerons latéraux 3. Le plateau 2 porte par les longerons 3 au moins aux quatre angles des poteaux fixes 4. Des poteaux mobiles 5 sont également prévus pour être supportés par les longerons 3. Les poteaux fixes 4 et mobiles 5 sont destinés à supporter des longerons supérieurs 6, 7.

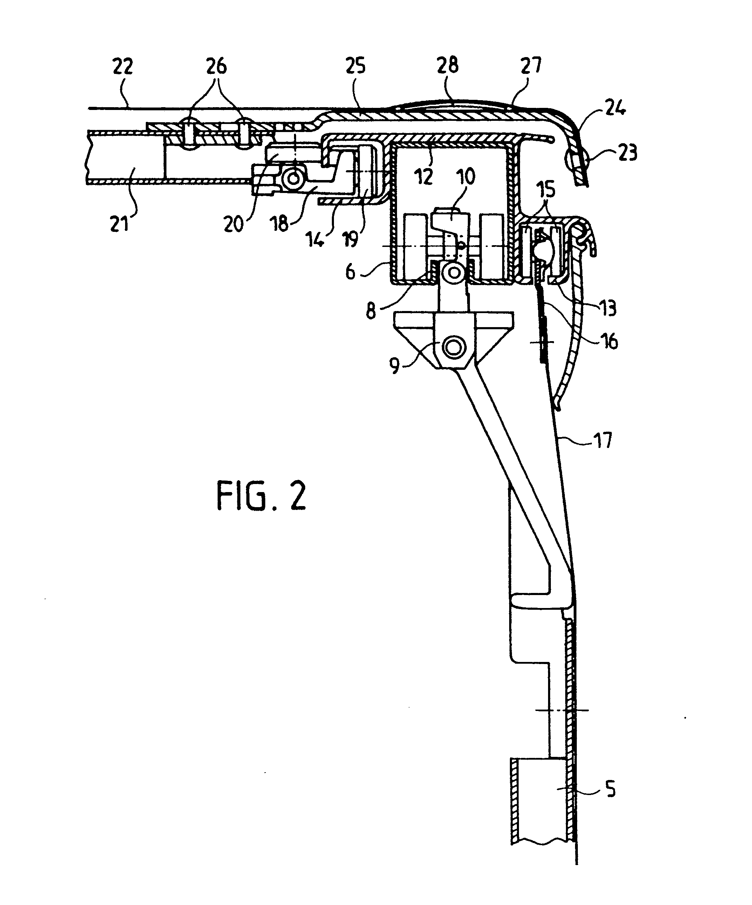

Comme l'illustre la fig. 2, les longerons supérieurs, tels que 6, sont constitués par des profilés, par exemple rectangulaires, présentant une rainure longitudinale 8 dans leur bord inférieur pour le passage de suspentes articulées 9 reliant des chariots 10 à chaque poteau mobile 5. La partie inférieure des poteaux mobiles 5 est fixée aux longerons correspondants 3 par des chapes 11 ou organes analogues. Les longerons supérieurs, tels que 6, supportent des profilés 12 qui, dans l'exemple illustré par la fig. 2, comportent ou délimitent des chemins de roulement 13 et 14. Le chemin de roulement 13 contient des galets 15 pour des plaques de suspension 16 auxquelles est fixée, par exemple rivetée, une bâche latérale 17.

Le chemin de roulement 14 des deux profilés 12 coiffant les longerons 6, 7 est destiné à des chariots 18 munis de galets de support 19 et de guidage 20. Les chariots 18 disposés, respectivement, dans les longerons supérieurs 6 et 7 supportent deux à deux des traverses 21.

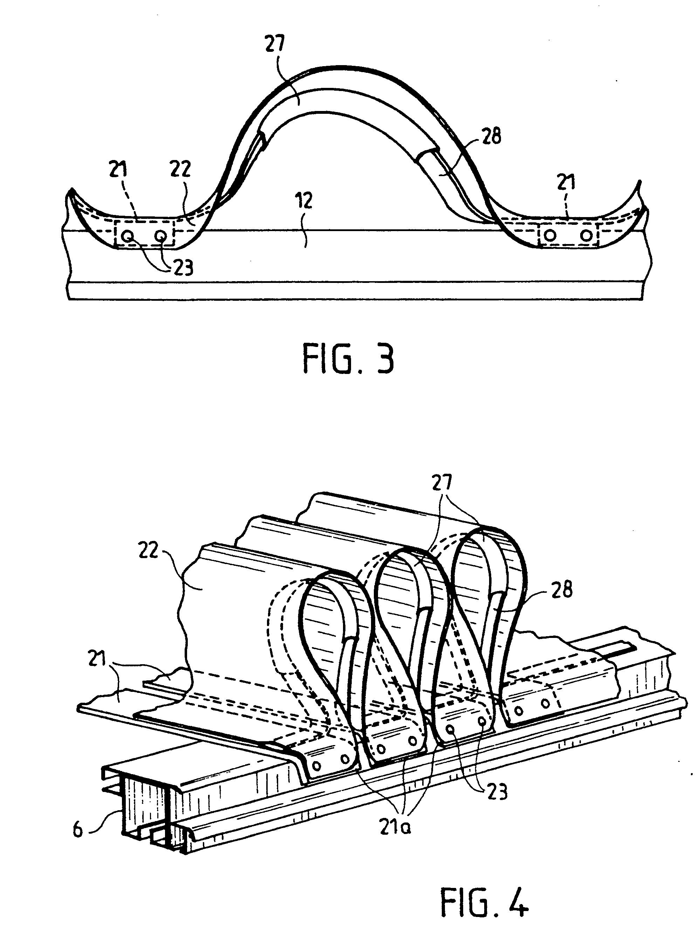

Les traverses 21 sont destinées à supporter une bâche supérieure 22 devant s'étendre sur tout ou partie de la semi-remorque lorsqu'elle est tendue mais devant pouvoir être pliée en accordéon lorsque les traverses 21 qui la supportent sont déplacées pour être rapprochées les unes des autres comme cela est illustré schématiquement en 21a à la fig. 1 et à la fig. 4, lesdites traverses devant pouvoir venir en contact les unes avec les autres.

La bâche 22 est fixée sur les côtés latéraux des traverses 21 au moyen de rivets ou oeillets 23 qui la traversent ainsi qu'un bord tombé de recouvrement 24 du profilé 12.

Le bord tombé 24 est formé à l'extrémité d'une platine 25, elle-même fixée, par exemple rivetée, en 26 sur la traverse 21 correspondante. La platine 25 est conformée pour être légèrement surélevée par rapport au dessus de chaque traverse 21 afin que la bâche 22 ne soit pas en contact avec les traverses et ne puisse pas raguer sur celles-ci lorsque la semi-remorque circule et est soumise aux efforts aérodynamiques qui en résultent.

Une partie de la bâche 22 qui se trouve au-dessus de la platine 25 de chaque traverse est munie de goussets 27 qui s'étendent au moins sur une partie de la bâche comprise entre deux traverses 21.

Un seul gousset 27 peut aussi et cela de préférence être formé sur toute la longueur de la bâche.

Le ou les goussets 27 contiennent au moins une latte 28 s'étendant sur toute la longueur de la bâche.

Bien que la latte 28 puisse être plane, de préférence et ainsi que l'illustre la fig. 2, cette latte 28 est cambrée transversalement pour tourner sa convexité vers le haut.

Les lattes 28 sont fabriquées en matière souple élastique, par exemple, en matière synthétique telle qu'un polyéthylène, un polypropylène, un polyamide, un élastomère ou analogues et ces lattes sont ou non armées d'une ou de plusieurs âmes métalliques ou en d'autres matières plastiques en dépendance de la ou des matières utilisées pour leur fabrication. Lorsque la bâche est tendue, chaque latte 28 s'étend linéairement. Lorsque la bâche 22 doit être repliée, on fait coulisser les traverses 21, soit vers l'avant, soit vers l'arrière, de la semi-remorque pour les rapprocher les unes des autres. Les lattes 28 présentent une grande flexibilité mais néanmoins une certaine raideur et ne peuvent pas être cintrées vers le bas puisqu'elles sont disposées au-dessus des profilés longitudinaux 12 et des longerons supérieurs 6, 7. Par contre et cela est facilité par leur forme cambrée, elles tendent à fléchir vers le haut en constituant des arceaux de support pou.r les côtés latéraux de la bâche s'étendant entre deux traverses consécutives 21 et en faisant que la bâche est progressivement pliée en accordéon, ce qui est illustré par les fig. 3 et 4.

La partie de la bâche et/ou de la latte 28 se trouvant au niveau des traverses peut, le cas échéant, être fixée à la platine 25 mais cela n'est pas nécessaire.

Dans ce qui précède, l'invention met en oeuvre une latte de chaque côté de la bâche. Il est possible, si on le désire, de prévoir plusieurs lattes étroites disposées parallèlement ou encore de remplacer la ou les lattes par des cordes à piano. Une seule latte peut aussi être prévue en regard de la partie médiane des traverses 21.

On ne sortirait pas du cadre de l'invention en prévoyant des goussets à différents emplacements de la bâche 22 c'est-à-dire à différents emplacements par rapport aux traverses 21.

Les goussets 27, qu'ils soient constitués par des segments comme illustrés aux dessins ou qu'ils soient continus, peuvent être soudés ou cousus à la bâche sur leurs deux côtés, ou encore ils peuvent être soudés ou cousus par un seul côté et maintenus seulement de place en place, éventuellement par des fixations amovibles, sur l'autre côté afin de faciliter la mise en place et le changement éventuel de la ou des lattes et/ou cordes à piano.

L'invention n'est pas limitée à l'exemple de réalisation, représenté et décrit en détail, car diverses modifications peuvent y être apportées sans sortir de son cadre. En particulier, lorsque les lattes sont constituées par des cordes à piano, il est avantageux que celles-ci soient pliées en zigzag, c'est à dire en accordéon et soient cintrées ainsi qu'exposé dans ce qui précède.

**Revendications**

1. Dispositif pour le bâchage de véhicules et notamment de véhicules routiers, caractérisé en ce qu'il comprend des longerons (6) disposés au moins sur les côtés latéraux du véhicule, lesdits longerons supportant des traverses mobiles (21) sur lesquelles est fixée une bâche (22) reliée à au moins une latte (28) déformable élastiquement et s'étendant longitudinalement.

2. Dispositif selon la revendication 1, caractérisé en ce que les lattes (28) sont reliées à la bâche (22) au. moins à la partie de celle-ci se trouvant au-dessus des longerons latéraux (6, 7) du véhicule.

3. Dispositif selon l'une des revendications 1 et 2, caractérisé en ce que les parties de la bâche, qui sont reliées aux lattes, sont disposées au-dessus d'une platine (25) prolongeant les traverses (21) et s'étendant à un niveau supérieur à celui du dessus desdites traverses (21).

4. Dispositif selon l'une des revendications 1 à 3, caractérisé en ce que la bâche (22) est fixée par des rivets, oeillets ou analogues (23) au moins à un bord tombé (24) formé par chaque platine (25) prolongeant les traverses (21).

5. Dispositif selon l'une des revendications 1 à 4, caractérisé en ce que les lattes (28) sont disposées dans des goussets (27).

6. Dispositif selon l'une des revendications 1 à 5 caractérisé en ce que les gousssets (27) sont indifféremment constitués par des segments où s'étendent sur toute la longueur de la bâche (22).

7. Dispositif selon l'une des revendications 1 à 6, caractérisé en ce que les goussets (27) présentent des parties amovibles.

8. Dispositif selon l'une des revendications 1 à 7, caractérisé en ce que les lattes sont fabriquées en matières souples élastiques du genre polypropylène, polyéthylène, polyamide, élastomère et sont ou non armées.

9. Dispositif selon l'une des revendications 1 à 8, caractérisé en ce que les lattes sont cambrées transversalement en tournant leur convexité vers le haut.

10 - Dispositif selon l'une des revendications 1 à 8, caractérisé en ce que les lattes (28) sont planes.

11. Dispositif selon l'une des revendications 1 à 7 et 9 et 10, caractérisé en ce que les lattes sont constituées par des cordes à piano.

12. Dispositif selon l'une des revendications 9 à 11, caráctérisé en ce que les cordes à piano sont pliées en zigzag.

13. Dispositif selon l'une des revendications 1 à 12, caractérisé en ce que les traverses (21) sont reliées aux longerons (6, 7) du véhicule par des chariots (18) à galets de support (19) et de guidage (20).

14. Dispositif pour le bâchage de véhicules notamment de véhicules routiers sensiblement tel que décrit et représenté aux dessins annexés.

FIG. 1

FIG. 2

FIG. 3

FIG. 4

EP 0 459 879 A1

Office européen
des brevets

**RAPPORT DE RECHERCHE EUROPEENNE**

Numero de la demande

EP    91 40 1351

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2162703 (BIGINI)<br>* page 2, ligne 35 - page 4, ligne 43; figures * | 1, 2 | B60J7/06 |
| A | DE-C-3541812 (SCHMITZ)<br>* abrégé; figures * | 1 | |
| P,X | EP-A-0379821 (S.E.S.R.))<br>* colonne 2, ligne 48 - page 3, ligne 45; figures * | 1 | |
| | | | **DOMAINES TECHNIQUES RECHERCHES (Int. Cl.5)**<br><br>B60J |

Le présent rapport a été établi pour toutes les revendications

| Lieu de la recherche | Date d'achèvement de la recherche | Examinateur |
|---|---|---|
| LA HAYE | 06 SEPTEMBRE 1991 | VANNESTE M.A.R. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

 

& : membre de la même famille, document correspondant

EPO FORM 1503 03.82 (P0403)

8